# EUROPEAN PATENT APPLICATION

(11) **EP 2 364 802 A1**
(43) Date of publication of application: **14.09.2011**
(21) Application number: 11001449.5
(22) Date of filing: 22.02.2011
(51) Int. Cl.: B23C 3/12

(54) **Tube end preparation tool**

(30) Priority: 08.03.2010 NL 1037781
(71) Applicant: Wavin B.V., 8011 CW Zwolle (NL)
(72) Inventor: Nyhuis, Thorsten, 7701 BS Dedemsvaart (NL); Mureau, Bernardus Cornelis Hubertus, 7701 BS Dedemsvaart (NL)
(74) Representative: Ekkel, Ronald

(57) **Abstract**

Tool for preparing a tube end for installation. The tool comprising a head, designed to be inserted in the tube end. The head comprising at least one of the following: a calibration section (6) for shaping the tube end into a desired shape, a chamfer section (10) for providing the tube end with a chamfered edge, a deburr section (7) with at least one cutting member for removing burrs from the tube end. The tool further comprises at least one first protection member (16) located behind the head and at least one second protection member (14) located in front of the head, seen in insert direction, wherein radially outward facing surfaces of the first and second protection members together define an imaginary envelope that encompasses the head.

## Description

The invention relates to a tool for preparing tube ends for installation.

During installation, tubes often need to be cut at length before being connected to another component, e.g. a fitting. The cutting step may cause the tube end to become distorted, making it difficult to establish a good connection. In addition, the tube end may feature burrs, which may cause damage to the other component during installation. To prevent these problems, the cut tube end is usually treated with a special tool. Such tool typically comprises a handle which is provided with a head that is to be inserted into the tube end. The tool head may comprise a calibration section for returning the tube end into its original shape (or another desired shape). The tool head may also comprise a deburr section with one or more cutter members for removing the burrs from the tube end. The tool head may also comprise a chamfer section for providing the tube edge with a chamfer, at its inner and/or outer side, to facilitate installation. The tool may further comprise a fall protector, to protect the tool head from becoming damaged or causing damage to the surroundings during a fall. Known fall protectors usually comprise a cage-like structure that surrounds the tool head and thus prevents direct contact between said head and the surroundings.

These known fall protectors suffer from a number of drawbacks. The cage-like structure hides the head from view, at least partially. Lack of visual feedback may cause the head to be inserted improperly, e.g. skew, eccentric and/or not far enough, which will result in a poorly calibrated tube. Also, the fall protector may limit the manoeuvrability of the tool, especially where space around the tube is cramped (which often is the case in installation environments). The known fall protectors may further impede discharge of chips, generated during deburring and/or chamfering. These chips may become trapped between the tube and the fall protector, where they may hamper the calibration process, or worse, cause damage to the tube. Other disadvantages, associated with these known tools, are that their insert force may be high, especially when used with large diameter tubes, and that cleaning may be cumbersome, as the chips collected in the fall protector are difficult to remove.

It is an object of the present invention to provide a tube preparation tool of the afore described type, in which at least part of the drawbacks of the known tools are overcome. To that end, a tool according to the invention is provided with at least one first protection member located behind the tool head, and at least one second protection member located in front of the tool head, seen in insert direction, wherein radially outward facing surfaces of the first and second protection members together define an imaginary envelope that encompasses the entire tool head, preferably with some clearance.

The imaginary envelope represents the floor (or some other surface) against which the tool during a fall may hit. By ensuring that the imaginary envelope encompasses the tool head, it is thus ensured that the head will never touch the floor. Preferably, some clearance is provided between the imaginary envelope and the head. This will ensure that the head will never come into contact with the imaginary envelope (and thus the floor), not even when the first and/or second protection members experience some deformation when hitting the floor.

Thanks to the imaginary character of the envelope, the fall protector has a very open structure, leaving the head largely, if not entirely free from physical obstacles. Thus, an installer will have full view on the head when inserting it into a tube end, which ultimately may result in better prepared tube ends and less installation errors. As there will be no physical obstructions surrounding the tube, chips and burrs can readily escape. Also, manoeuvrability of the tool will be unimpaired now that the imaginary envelope does not create any physical barrier around the tube end.

Further advantageous embodiments of a calibration tool according to the invention and the use thereof are set forth in the dependent claims.

To explain the invention, an exemplary embodiment thereof will hereinafter be described with reference to the accompanying drawings, wherein:
FIG. 1 shows, in perspective view, a tool according to the invention;
FIG. 2 shows, in further detail, the head of the tool of Figure 1;
FIG. 3 shows, in frontal view, the head of Figure 2;
FIG. 4 shows, in perspective view, the deburr section of the head of Figure 2; and
FIG. 5 shows, in perspective view, the calibration section of the head of Figure 2.

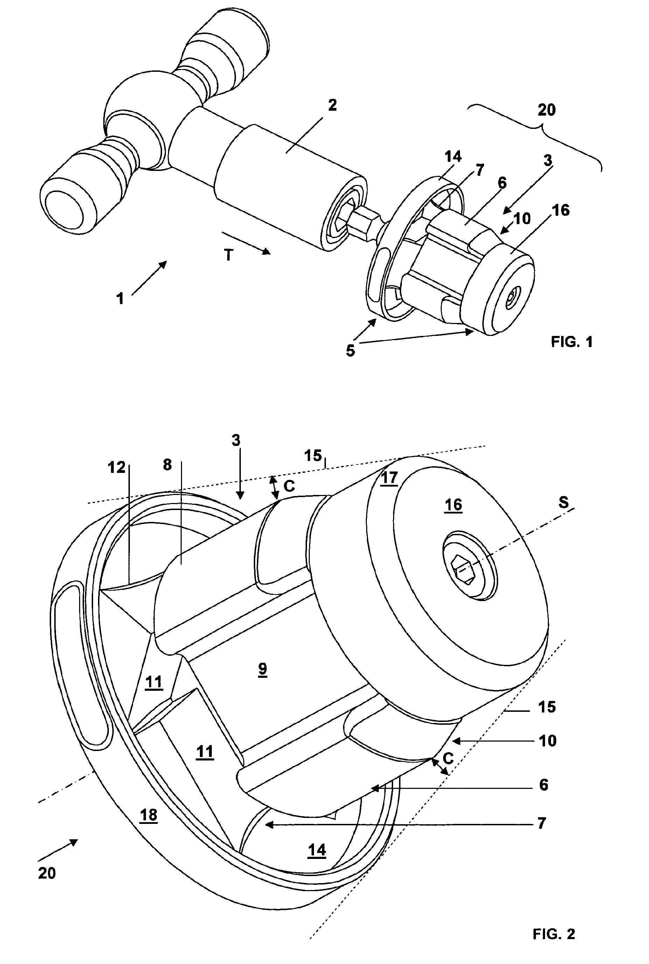

Figure 1 shows a tool 1 for preparing a tube end (not shown) prior to installation. The tool 1 comprises a handle 2, a head 3 and a fall protector 5. The head 3 is arranged to be inserted in the tube end and may comprise several sections for subjecting said tube end to several treatments. In the illustrated embodiment, the head 3 comprises a calibration section 6 and a deburr section 7 which is located directly behind the calibration section 6. In this description, the wording 'behind', 'rear', 'front' and 'in front of are used in relation to the insert direction of the tool 1 into the tube end, as indicated by arrow T.

The calibration section 6 comprises a body 8 that has an outer envelope that corresponds to the desired inner contour of the tube end to be calibrated. In most instances, such outer envelope will be cylindrical, as shown. However, alternative shapes are possible, especially in cases where the tube end needs to be calibrated only (i.e. no deburring or chamfering, which latter treatments would ideally require the tube end to have a rotation symmetrical cross section). The body 8 may be provided with one or more grooves 9, as shown. Each groove 9 preferably starts at the front end 10 of the cylindrical body 8 and may run up to the rear end. Alternatively it may end somewhere halfway the body 8. The groove(s) 9 may extend in axial direction, as shown, or extend in another direction, e.g. a helical direction. The main goal of the groove(s) 9 is to minimize the contact area between the calibration section 6 and the tube end, in order to minimize friction during insertion and/or operation. The front end 10 of the calibration section 6 may be chamfered, as shown.

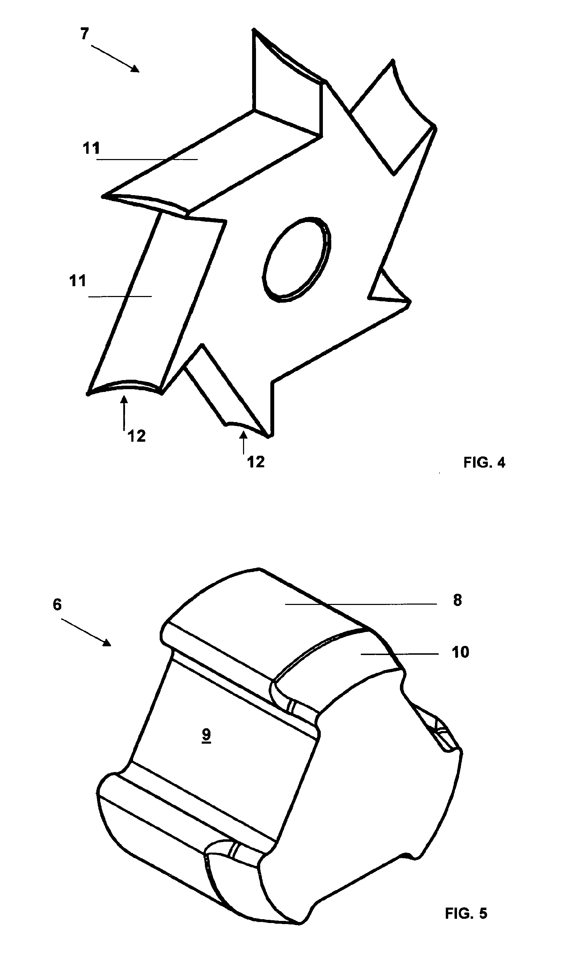

The deburr section 7 comprises at least one cutting member 11. In a preferred embodiment, it may comprise several cutting members 11, preferably arranged at regular intervals along the circumference of the head 3. Each cutting member 11 features a cutting edge 12. One or more of these cutting edges 12 may extend substantially parallel to the centre axis S of the tool 1 so as to define a cylindrical cutting plane. Alternatively, one or more of said cutting edges 12 may include an (acute) angle with the centre axis S, so as to define a conical cutting plane. In the latter case, the section 7 may function not only as deburr section but as chamfer section as well. In either case, the cutting edges 12 may have a concave shape, as perhaps best seen in Figures 2 and 4. Such concave shape may help to reduce the insert force of the tool 1 even further.

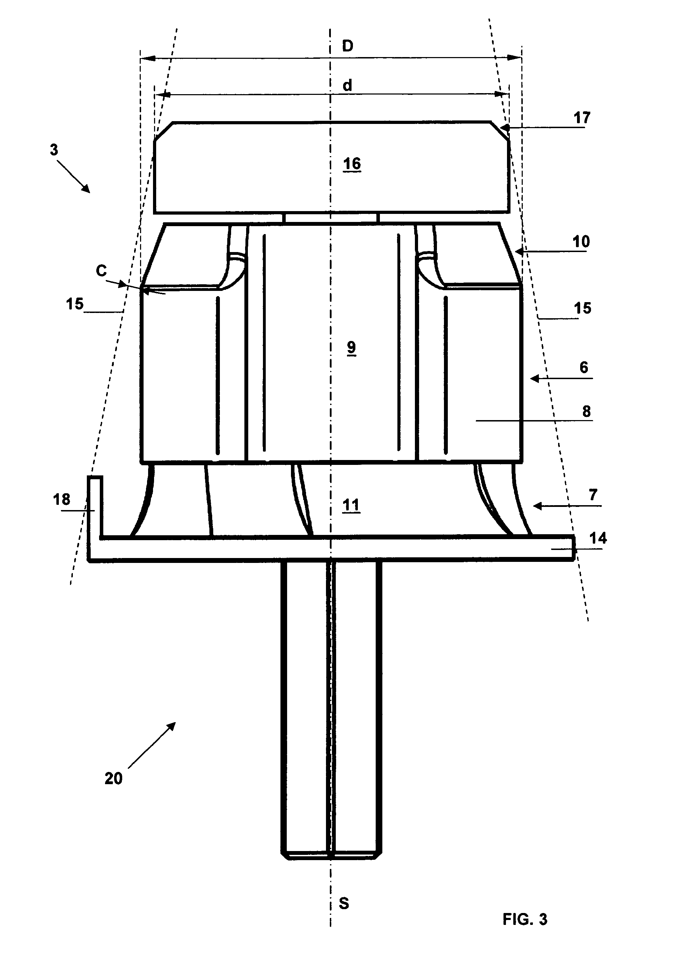

The fall protector 5 comprises a first protection member 14, located behind the head 3 and a second protection member 16, located in front of the head 3. Both members 14, 16 together span an imaginary envelope 15 that has been depicted in dashed lines in Figure 2 and 3. The illustrated envelope 15 has a conical shape. It will be clear that other shapes are possible by varying shape, size and/or location of the first and second protection members 14, 16. Important is that the imaginary envelope 15 surrounds the entire head 3, preferably with some clearance C, as shown. The imaginary envelope 15 represents all possible positions that the floor (or some other surface) may have with regard to the tool 1 during a fall. It will be clear from Figure 3, that the head 3 will never contact the floor (dashed lines 15).

In the illustrated embodiment, the first and second protection member 14, 16 are both disc shaped, each having a ring shaped outer contour. In an alternative embodiment (not shown) one or each protection member 14, 16 can be replaced by a series of elements, e.g. pins, extending radially outward and together defining an alternative outer contour. The aforementioned outer contours do not have to be circular. Many other forms are possible, e.g. triangular, square, polygonal or oval. Also, the outer contour defined by the first protection member(s) 14 may differ in shape from the outer contour defined by the second protection member(s) 16. The outer contours do not have to be symmetrical, let alone rotation symmetrical. Basically, the only limitation to the outer contours (and thus to the first and second protection members 14, 16) is that they are dimensioned such that the resulting envelope 15 will encompass the entire head 3.

Advantageously, the first protection member 16 may be provided with one or more lateral extensions 18 that extend substantially axially, that is in the direction of the second protection member 14, so as to form a protective shield for the cutting members 11. The shield 18 may be ring shaped as shown in Figure 2, or be formed of separate elements, as visible at the left hand side in Figure 3.

Advantageously, the outer contour d of the second protection member or members 16 is smaller than the outer contour D of the head 3, as seen in Figure 3, so that during use the second protection member(s) 16 can be readily inserted into the tube end. To facilitate such insertion and to help centring the head 3 during insertion, the second protection member(s) 16 may advantageously be provided with a chamfered front edge 17.

The afore described embodiment has no separate sections for deburring and chamfering. Both functions are combined in section 7. In alternative embodiments, the functions may be embodied in separate sections. In such case, the deburr section may be located behind the chamfer section, which in turn may be located behind the calibration section 6 (seen in insert direction T). In an alternative embodiment, the calibration section 6 and/or the deburr section may be left out. The location of the sections may be interchanged, although it will generally be beneficial to locate the calibration section 6 in front of the other sections.

The handle 2 and the head 3 are preferably made of metal. Part of the handle 2 may be made of plastic or covered by plastic or rubber for ergonomic comfort. Part of the fall protector 5, e.g. the first and/or second protection members 14, 16 may likewise be made of or covered by plastic or rubber. This may help to break the fall and prevent detrimental resonances from being excited in the tool 1 due to the shock experienced after the fall.

The head 3 and the fall protector 5 may be formed as one unit 20. Advantageously, this unit 20 may be detachably connected to the handle 2 via suitable coupling means, preferably of the quick acting type. In such case, the unit 20 may be readily exchanged for other units of different sizes (for preparing tubes of different diameters). Of course, the units 20 can also be used with automated calibration equipment, although the need for a fall protector may less important in such case.

The tool 1 according to the invention may be used to prepare plastic tubes or metal plastic tubes, having at least one layer of metal, e.g. aluminium. To prepare such tubes, the head 3 is inserted in the tube end with the second protection member 16 first, followed by the calibration section 6. This is facilitated by the chamfered front end 10 of the calibration section, which will cause the insert force to be virtually zero at first and to gradually increase as the head 3 is urged forward. Thanks to the grooves 9, the insert force will remain relatively low, as the grooves 9 minimise the contact area and thus the friction between the calibration section 6 and the tube. As the head 3 is urged further into the tube, the edge of the tube will pass over the cutting members 11 and come to rest against the first protection member 14. Next the head can be rotated. This will allow the calibration section 6 to urge the tube end back into its original or desired shape. It will furthermore cause the cutting members 11 to cut away burrs from the tube end, and provide the edge with an inner chamfer.

Thanks to the open structure of the fall protector 5, an installer can have good visual feedback on the tool and tube end during the whole process, and chips and burrs may readily escape.

The invention is not in any way limited to the exemplary embodiments presented in the description and drawing. All combinations (of parts) of the embodiments shown and described are explicitly understood to be incorporated within this description and are explicitly understood to fall within the scope of the invention. Moreover, many variations are possible within the scope of the invention, as outlined by the claims.

## Claims

1. Tool for preparing a tube end for installation, the tool comprising a head that is designed to be inserted in the tube end, the head comprising at least one of the following: a calibration section for shaping the tube end into a desired shape, a chamfer section for providing the tube end with a chamfered edge, a deburr section with at least one cutting member for removing burrs from the tube end, wherein the tool further comprises at least one first protection member located behind the head and at least one second protection member located in front of the head, seen in insert direction, wherein radially outward facing surfaces of the first and second protection members together define an imaginary envelope that encompasses the head.

2. Tool according to claim 1, wherein the calibration section has no overlap with the first and/or second protection members, in insert direction.

3. Tool according to claim 1 or 2, wherein the chamfer section has no overlap with the first and/or second protection members, in insert direction.

4. Tool according to anyone of the preceding claims, wherein the at least one first protection member or the at least one second protection member has a portion that overlaps with the deburr section in insert direction, so as to form a protective shield for the at least one cutting member.

5. Tool according to anyone of the preceding claims, wherein the or each second protection member is located at some distance in front of the head.

6. Tool according to anyone of the preceding claims, wherein the or each second protection member does not project beyond the head, in radial direction.

7. Tool according to anyone of the preceding claims, wherein the radially outward facing surfaces of the or each second protection member have a tapered front edge.

8. Tool according to anyone of the preceding claims, wherein the cross section of the imaginary envelope decrease in the direction from the at least one first protection member towards the at least one second protection member.

9. Tool according to anyone of the preceding claims, wherein the imaginary envelope has the shape of a cone or a truncated cone.

10. Tool according to anyone of the preceding claims, wherein the first protection member is disc shaped, with a diameter that is larger than that of the head.

11. Tool according to anyone of the preceding claims, wherein the second protection member is disc shaped, with a diameter that is smaller than that of the head.

12. Tool according to anyone of the preceding claims, wherein the calibration section comprises at least one groove, extending from a front end of said section.

13. Tool according to anyone of the preceding claims, wherein the head comprises a calibration section and a deburr section, wherein the deburr section is located behind the calibration section, seen in insert direction.

14. Tool according to anyone of the preceding claims, wherein the at least one cutting member has a concave cutting edge.

15. Use of the tool according to anyone of the preceding claims for calibrating a plastic tube or a metal plastic tube.
